(19) Europäisches Patentamt
European Patent Office
Office européen des brevets

(11) **EP 2 875 308 B1**

(12) **EUROPEAN PATENT SPECIFICATION**

(45) Date of publication and mention
of the grant of the patent:
**27.04.2022 Bulletin 2022/17**

(21) Application number: **13739994.5**

(22) Date of filing: **22.07.2013**

(51) International Patent Classification (IPC):
**F42B 35/00** *(2006.01)*        **F41A 31/00** *(2006.01)*

(52) Cooperative Patent Classification (CPC):
**F41A 31/00; F42B 35/00**

(86) International application number:
**PCT/EP2013/065381**

(87) International publication number:
**WO 2014/016232 (30.01.2014 Gazette 2014/05)**

(54) **DEVICE FOR MONITORING THE HEALTH STATUS OF A LIMITED LIFE CRITICAL SYSTEM**

VORRICHTUNG ZUR ÜBERWACHUNG DES GESUNDHEITSZUSTANDES EINES KRITISCHEN SYSTEMS MIT BEGRENZTER LEBENSDAUER

DISPOSITIF POUR SURVEILLER L'ÉTAT DE SANTÉ D'UN SYSTÈME CRITIQUE À DURÉE DE VIE LIMITÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2012 IT RM20120353**

(43) Date of publication of application:
**27.05.2015 Bulletin 2015/22**

(73) Proprietor: **MBDA ITALIA S.p.A.**
**00131 Roma (IT)**

(72) Inventor: **BANCALLARI, Luca**
**00131 Roma (IT)**

(74) Representative: **Carangelo, Pierluigi et al**
**Jacobacci & Partners S.p.A.**
**Via Tomacelli 146**
**00186 Roma (IT)**

(56) References cited:
**EP-A2- 1 992 904          EP-A2- 1 992 904**
**WO-A1-2011/072674     WO-A1-2011/072674**
**US-A1- 2003 058 130**

**Description**

The present description relates to the technical field of monitoring systems, and it relates in particular to a device for monitoring the health status of a limited life critical system. US 2003/058130 A1, WO 2011/072674 A1 and EP 1 992 904 A2 constitute relevant prior art documents.

Critical systems are defined those systems that, in the case of an operative failure, may cause severe consequences, such as:

- death or severe risks to people;
- loss or severe damaging of means and material;
- severe environmental damages.

For example, in the case that the critical system is represented by an armament, such system can be defined as critical, since a malfunctioning thereof may jeopardize a military mission, hence the life of people related to it.

It is known that there is a series of external factors that degrade the performance of a system or a device, thereby altering its health status, even if it is not used. Such degradation is referred to as aging.

The above-mentioned factors, which may act individually, or in a mutual combination, are represented, for example by storage temperature, humidity, vibrations or mechanical shocks.

The critical systems, exactly in view of the consequences related to a possible malfunctioning thereof, are limited life system, since they have a life duration within which the degradation remains within accepted limits.

Based on statistical considerations, it is possible to estimate predictively the health status and the life duration of a critical system, for example, in order to program the replacement of the systems at the end of their life duration and/or to avoid using systems beyond their life duration. It shall be apparent that the above-mentioned statistical approach is not an optimal one, first of all, because it requires the provision of suitable and wide margins in order to ensure safety requirements, secondly because it cannot take into account particularly exceptional circumstances which a critical system may be subjected to. Furthermore, the above-mentioned statistical approach requires that long and expensive test procedures are carried out.

The object of the present description is to provide a device that allows monitoring in real time the health status of a limited life critical system.

Such an object is achieved by a monitoring device as generally defined in claim 1 and method claim 10.

. Preferred and advantageous embodiments of the above-mentioned device are defined in the appended dependent claims.

The invention will be better understood from the following detailed description of a particular embodiment, given by way of example, and, therefore, by no way limiting example, with reference to the appended drawings, in which:

- Fig. 1 shows an exemplary block diagram of a monitoring system comprising a monitoring device intended for monitoring the health status of a critical system; and
- Fig. 2 shows an exemplary block diagram of the monitoring device of Fig. 1.

In the Figures, similar or like elements will be indicated by the same reference numerals.

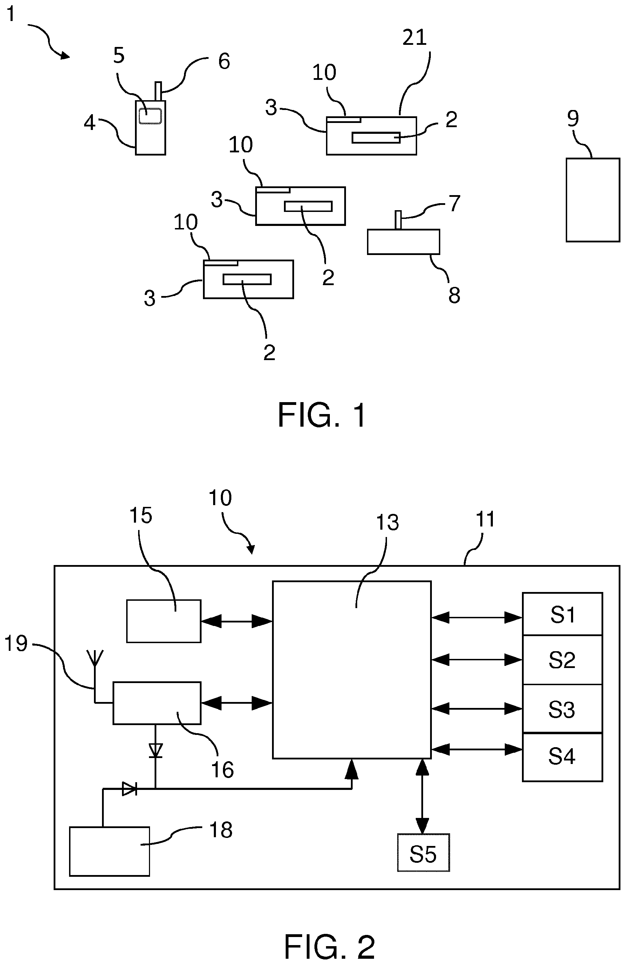

In Fig. 1, a non-limiting embodiment of a system 1 for monitoring in real time the health status of a critical system 2 is schematically shown.

In the particular example illustrated, without for this introducing any limitations, the monitoring system 1 is intended for monitoring the health status of a plurality of critical systems 2, which represent, for example, munitions 2 within a storage warehouse. In the illustrated example, each of said munitions 2 is housed in a corresponding container 3. The containers 3 comprise a containment body to which corresponding monitoring devices 10 are associated, and more precisely mechanically coupled.

In the particular example illustrated, the monitoring system 1 comprises a mobile query terminal 4, for example, a personal digital assistant device provided with a display 5 and an antenna 6, adapted to query at a distance the monitoring devices 10 associated to the corresponding munitions 2. Alternatively, or in addition, at least one fixed query station 8 may be provided, which is adapted to query at a distance the monitoring devices 10, for example, being provided with an antenna 7.

In accordance with an embodiment, the mobile query device 4 and/or the fixed query station 8 are configured to transmit to a remote server 9 the information acquired through the queries, for example, to transmit such information onto a remote logistic management database.

The mobile query terminal 4 and/or the fixed query station 8 are RFID reader devices (Radio Frequency IDentification devices) or similar devices.

Regarding the possible critical systems 2 to be monitored, it shall be apparent that these systems may include mechanical, electronic, electro-mechanical devices, optionally comprising also chemicals such as, for example, explosives, propellants, etc.

In Fig. 2, a functional block diagram of an embodiment of a device 10 for monitoring the health status of the associated limited life critical system 2 is shown.

The monitoring device 10 comprises at least one measurement sensor S1-S4 adapted to measure a magnitude adapted to affect the health status of the critical system 2, by outputting an electric signal carrying information relative to such magnitude. In accordance with an embodiment, the above-mentioned measurement sensor S1-S4 is a temperature sensor. In accordance with an embodiment, the above-mentioned sensor S1-S4 is a humidity sensor. In accordance with a further embodiment, the above-mentioned sensor S1-S4 is a vibration and/or mechanical shock sensor. In accordance with an embodiment, the monitoring device 10 comprises a plurality of measurement sensors S1-S4 of different kinds, for example, a temperature sensor S1, a humidity sensor S2, a vibration sensor S3, for example, an acceleration sensor, and a shock sensor S4. Henceforth in the present description, reference will be made, without for this introducing any limitations, to the case where the monitoring device comprises a plurality of measurement sensors S1-S4.

The monitoring device 10 further comprises at least one processing unit 13, which is operatively connected to the measurement sensors S1-S4 and adapted to receive and sample the electric signals provided by the sensors S1-S4 to provide digital data related to the magnitudes measured by the measurement sensors S1-S4. For example, the above-mentioned processing unit 13 comprises a microcontroller, and more preferably a low consumption microcontroller.

The monitoring device 10 further comprises at least one memory 15 adapted to store the digital data sampled by the processing unit 13 and/or digital data obtained by the processing unit 13 by processing said sampled digital data. In the non-limiting example illustrated in Fig. 2, the above-mentioned memory 15 is represented as being external to the processing unit. In an implementation variant, such memory 15 could be internal to the processing unit 13, or multiple memory units could be provided, for example, an internal memory unit and an external memory unit.

The monitoring device 10 comprises a power supply system 18 of the processing unit 13. Such power supply system 18 can be also intended to directly or indirectly supply (in the illustrated example, by the processing unit 13) the measurement sensors S1-S4, in the case that such sensors S1-S4 require, for the operation thereof, a power supply source. In accordance with an embodiment, the above-mentioned power supply system 18 comprises a battery. In accordance with a further embodiment, the above-mentioned power supply system 18 comprises an energy harvesting device, internally or externally to the processing unit 13.

The monitoring device 10 comprises a passive RFID transponder 16 adapted to receive a request from an external query RFID device, for example, from the mobile query terminal 4 and/or the fixed query station 8, and to provide the stored digital data as a reply to the query device 4,8.

In accordance with a preferred embodiment, the above-mentioned RFID transponder 16 comprises a PIFA (Planar Inverted F Antenna) antenna 19, for example, made as a micro-strip on a substrate 11, which for example represents a printer circuit board on which the various electronic components of the monitoring device 10 are mounted.

The passive RFID transponder 16 may be a component external to the processing unit 13 and operatively connected to the latter through suitable electric connections, or it may be a module provided within the processing unit 13, except for the antenna 19, which in any case would be external. In the first one of the above-mentioned embodiments, the memory 15 could be a memory, for example an EPROM, internal to the RFID transponder 16. In the other one of the above-mentioned embodiments, said memory 15 can be an external memory which the processing unit 13 accesses when the RFID transponder within the processing unit 13 is energized by a fixed or mobile external query device 4,8. In such a case, the processing unit 13 is energized, for example, to carry out the above-mentioned reading from the same internal transponder RFID. On the contrary, in the sampling and/or processing operations of the digital data, the processing unit 13 is supplied by the power supply system 18. Due to this reason, the operation of the device 10 can be referred to as semi-passive, i.e., it is active during the data acquisition and processing, and it is passive when reading such data as a reply to a query by an external device 4,8. Due to the above-mentioned reason, two diodes have been illustrated in Fig. 2 between the RFID transponder 16 and the processing unit 13, and between the power supply system 18 and the processing unit 13, to the aim of pointing out that in the presence of a RFID link, the transponder 16 may supply the processing unit 13, while in the absence of such link, for the acquisition and storage of the samples, the processing unit 13 is usually supplied by the power supply system 18.

In accordance with an embodiment, the processing unit 13 is programmed to switch between two possible energy consumption statuses, in which one of said statuses is a status having a relatively limited consumption compared to the other one, for example, a so-called powerdown status. In such embodiment, the processing unit 13 is such as to normally and mainly remain in the status of relatively limited consumption to switch to the other status at preset time intervals in order to sample the electric signals provided by the sensors S1-S4. For example, such sampling occurs every half hour, or every hour. Therefore, in this example it is apparent that the processing unit 13 mainly remains in the status of relatively limited energy consumption.

In accordance with an embodiment, the monitoring device 10 comprises a passive movement sensor S5 operatively connected to the processing unit 13. In accordance with an embodiment, such passive movement sensor S5 is an inertial mass sensor connected to two pins of the processing unit 13, in which a mobile mass following a handling of the monitoring device 10 is such as to determine an interrupt between the pins of the processing unit 13 in order to determine a reactivation of such processing unit 13 from a powerdown status.

The processing unit 13 is such as to switch from the relatively limited consumption status to the other status when the passive movement sensor S5 detects a movement having a width exceeding a preset threshold. In the above-mentioned embodiment, it is possible to provide that a vibration sensor and/or a mechanical shock sensor is sandwiched between the measurement sensors S1-S4, which is adapted to output an electric signal and in which, following said switching, the processing unit 13 is such as to sample the electric signal provided by the above-mentioned vibration and/or shock sensor and to store digital data related to the vibration and/or shock values if the latter exceed, for example, preset thresholds. In this manner, advantageously, the shock or vibration measurements are activated at each event, avoiding acquiring useless periodical measurements when the critical system is not undergoing vibrations and/or shocks.

In accordance with an embodiment, the measurement sensor S1-S4 comprises a temperature sensor. In this case, the processing unit 13 is configured and programmed to calculate the equivalent storage time of the critical system 2 at a given reference temperature, for example, at 25° C. This measurement allows understanding how much the critical system 2 has aged compared to a storage under ideal conditions; hence, it provides a measurement that is useful to know the health status of the system, hence also the residual life of the system.

In particular, according to the above-mentioned embodiment, the processing unit 13 is configured and programmed to calculate the equivalent storage time of the critical system 2 at a reference temperature according to the Arrhenius law. Based on such law, it is possible to calculate an acceleration factor AF as:

$$\text{AF} = \exp\ [(-E_{aA}/k) * ((1/T_{int}) - (1/T_{ref}))] \qquad (1.1)$$

in which:

$E_{aA}$ = is the activation energy in J/mol (values that may be programmed and that are stored in the memory) of the degradation process;

$T_{ref}$ = reference temperature in °K (for example, of 293.15 °K for 20 °C, or 298.15 °K for 25 °C);

$T_{int}$ = is the current temperature within the critical system 2 in °K

k = is the universal gas constant (8.314472 J/mol/°K). Advantageously, the temperature $T_{int}$ can be a temperature esteemed based on an external temperature measurement.

The equivalent storage time T25 (in the no-limiting hypothesis that the reference temperature is 25° C) is obtained by integrating the acceleration factor AF upon time.

Since the processing unit 13 is such as to operate in the discrete domain of sampled data, the processing unit 13 can be programmed and configured to calculate the above-mentioned integral at each step, i.e., after the acquisition of each sample, according to a recursive formula based on which the equivalent storage time T25 at the current step "t" is equal to the sum of the equivalent storage time at the previous step "t-1", and of an additional contribution accumulated in the time interval elapsed between the previous step "t-1" and the current step "t". Such contribution is given by the product of the sampling interval (for example, 0.5 hours) by the acceleration factor $AF_t$ calculated at step t, i.e.:

$$\text{T25}_t = \text{T25}_{t-1} + 0.5\ \text{AF}. \qquad (1.2)$$

In the case that the reference temperature is 25° C, the acceleration factor AF may by calculated as exp(k*(Tc-25)/(Tc+273), in which Tc represents an estimate of the internal temperature $T_{int}$ obtained from the samples of the external temperature measured by the temperature sensor.

In the formula (1.1) of the acceleration factor AF, the temperature $T_{int}$ represents the real temperature of the critical system 2. Since, in a non-limiting embodiment, it can be supposed that such temperature depends on a first-order transfer function from the sampled temperature Ts by the processing unit 13, it is possible to show that the temperature Tc may be obtained as the scalar product between a vector Ts of samples having a predetermined length stored in the vector of samples Ts according to a FIFO storage technique, in which, at each step, i.e., at each sampling, the last acquired sample is inserted at the end, with a shift of the other samples in the vector Ts towards the first element of the vector (the sample of which is thus overwritten and leaves the vector), and a vector vet_e of real numbers, which represent exponential increment values.

In order to provide an example, it shall be supposed that:

- t_sam represents the sampling interval;

- T1 represents the temperature stored by the sensor and sampled;
- the initial temperature within the critical system 2 is, by the sake of simplicity and without for this introducing any limitations, of 0° C.

Starting from the initial instant after the first step, i.e., after an interval t_sam, the temperature within the critical system will be T1*(1-and$^{-t\_sam/\tau}$) in which $\tau$ represents the time constant of the system. At the next step, after an interval t_sam, it shall be supposed that T2 represents the temperature stored by the sensor and sampled. The temperature interval T2-T1 will provide a contribution (T2-T1)*(1-and$^{-t\_sam/\tau}$), while T1 will provide a contribution of T1*(1-and$^{-2t\_sam/\tau}$). Therefore, at the next step, the temperature esteemed within the critical system will be $T_c$ = T3*(1-and$^{-t\_sam/\tau}$) + T2*(and$^{-t\_sam/\tau}$-and$^{-2t\_sam/\tau}$) + T1* (and$^{-2t\_sam/\tau}$-and$^{-3t\_sam/\tau}$). This represents in mathematical terms a scalar product between a vector Ts of sampled temperatures [T3 T2 T1], i.e., a vector Ts of temperature samples, and an exponential increment vector. Therefore, it has been noticed that excellent results are obtained even if the vector Ts of sampled temperatures is a vector of a reduced number of elements, for example, of about ten elements. This type of calculation allows saving processing time and dissipated power. Furthermore, it allows estimating the internal temperature of the critical system 2 from the external one, for example, from the temperature measured by the monitoring device 10 at the container 3 of the critical system 2, or generally at an external point with respect to the interior of the critical system 2.

Based on the above-mentioned description, therefore, it shall be apparent that, in accordance with an advantageous embodiment, in order to calculate the equivalent storage time, the processing unit 13 is programmed for:

- sampling the signal provided by the temperature sensor to obtain a digital sample and storing it in a vector of samples Ts having a limited and preset length according to a FIFO storage technique;
- at each sampling step, calculating the scalar product between said vector of samples Ts and a vector, for example, previously stored the device 10, of real numbers, which represent exponential increment values.

In a completely similar manner, if both a temperature sensor and a humidity sensor are provided, it is possible to calculate the aging according to the Eyring-Peck-Arrhenius model (temperature-humidity combined model).

Similarly, if a vibration sensor is provided, it is possible to calculate the aging according to the reverse power model.

In accordance with further embodiments, the monitoring device 10 is capable of monitoring aging, hence the health status of the critical system 2, by further models such as, for example:

- controlling thresholds (OS - out of specification): it is recorded if preset temperature, humidity, vibration, shock, pressure thresholds are exceeded;
- turning on/off: the number of the turning on/off cycles is recorded;
- operative hours: the operative hours of the relative system are recorded.

In accordance with a further embodiment, the memory unit 13 is such as to store in the memory 15 at least one vector of data that represents a histogram and the processing unit 13 comparing said digital data to thresholds is such as to store the digital data in specific elements of said vector in order to provide said histogram. It shall be noticed that, in the case that such histogram is a temperature histogram, it shall be suitable to store the $T_c$ in such histogram, for example, at each step, i.e., the esteemed internal temperature of the critical system 2 in the manner described above.

From the description given above, it is possible to understand how a monitoring device of the type described above fully achieves the preset objects. Field experimental tests showed that a monitoring device of the type described above allows carrying out with a considerable autonomy an accurate and reliable monitoring of the health status of limited life critical systems.

It shall be apparent that, to the above-described monitoring device, those of ordinary skill in the art, in order to meet contingent, specific needs, will be able to make a number of modifications and variations, all of which anyhow falling within the protection scope of the invention, as defined by the following claims.

**Claims**

1. A device (10) for monitoring the health status of a limited life critical system (2), which undergoes ageing according to a variation of its internal temperature over time, comprising:

   - at least one measurement sensor (S1-S4) adapted to measure a magnitude adapted to affect the health status of the critical system (2) by outputting a signal carrying information relative to such magnitude, wherein the measurement sensor (S1-S4) comprises a temperature sensor configured to measure an external temperature of the critical system;
- at least one processing unit (13) operatively connected to the sensor (S1-S4) and adapted to receive and sample said signal to provide digital data relative to such magnitude;
- at least one memory (15) adapted to store said digital data or digital data obtained therefrom through said at least one processing unit (13);
- a power supply system (18) of the measurement sensor (S1-S4) and the processing unit (13);

**Characterized in that**:

- said device (10) further includes a passive RFID transponder (16) adapted to receive a request from an external query RFID device (4,8) from remote, and to provide as a reply said digital data to the query device (4,8) by accessing the memory; and
- the digital data comprise data related to the storage temperature of the critical system (2), and wherein the at least one processing unit (13) is programmed to calculate an equivalent storage time at a reference temperature by calculating an acceleration factor according to the Arrhenius law, the equivalent storage time being representative of the residual life of the critical system;

Wherein in order to calculate said equivalent storage time the at least one processing unit (13) is programmed for:

- Sampling said signal to obtain a digital sample and storing it in a vector of samples having a predetermined length according to a FIFO storage technique;
- Upon each sampling, carrying out the scalar product between said vector of samples and a vector of real numbers, which represent exponential increment values depending on the internal temperature as obtained from the samples of the external temperature measured by the temperature sensor.

2. The device (10) according to claim 1, wherein the processing unit (13) is programmed to switch between two energy consumption statuses, wherein one of said statuses is a status having a relatively limited consumption compared to the other one, the processing unit (13) being such as to normally and mainly remain in said status of relatively limited consumption to switch to the other status at preset time intervals in order to sample said signal.

3. The device (10) according to claim 2, comprising a passive movement sensor (S5) operatively connected to the processing unit (13), wherein the processing unit (13) is such as to switch from the relatively limited consumption status to the other status, when the passive movement sensor (S5) detects a movement having a width exceeding a preset threshold.

4. The device (10) according to claim 3, wherein said at least one measurement sensor (S1-S4) comprises a vibration and/or mechanical shock sensor that is adapted to output an electric signal, and wherein following said switching, the processing unit (13) is such as to sample said electric signal provided by the vibration and/or shock sensor.

5. The device (10) according to any one of the previous claims, wherein the processing unit (13) is such as to store in said memory (15) at least one vector of data that represents a histogram, and wherein the processing unit (13), by comparing said digital data to thresholds, is such as to store the digital data in specific elements of said vector in order to make said histogram usable by said external query RFID device (4,8).

6. The device (10) according to any one of the previous claims, wherein said RFID transponder (16) comprises a PIFA - Planar Inverted F Antenna (19).

7. A monitoring system (1) comprising at least one device (10) according to any one of the previous claims and at least one query RFID device (4,8) adapted to operatively interact with said device (10).

8. Monitoring system according to claim 7, wherein the at least one query RFID device (4,8) is configured to transmit to a remote server (9) the digital data.

9. A container (3) for a critical system (2) comprising a containment body adapted to adapted to house a critical system (2) therein, and **characterized in that** it comprises at least one device (10) according to any one of the previous claims 1 to 6, which is mechanically coupled to said containment body.

10. Method for obtaining an ageing estimate of a stored limited life critical system (2) which undergoes ageing according to a variation of its internal temperature over time, comprising the execution of the following steps:

M1. Providing a device including:

- at least one measurement sensor (S1-S4) adapted to measure a magnitude adapted to affect the health status of the critical system (2) by outputting a signal carrying information relative to such magnitude, wherein the measurement sensor (S1-S4) comprises a temperature sensor configured to measure an external temperature of the critical system;
- at least one processing unit (13) operatively connected to the sensor (S1-S4) and adapted to receive and sample said signal to provide digital data relative to such magnitude;
- at least one memory (15) adapted to store said digital data or digital data obtained therefrom by said processing unit (13);
- a power supply system (18) of the measurement sensor (S1-S4) and the processing unit (13);

M2. Processing, by the at least one processing unit (13), said signal according to the following sub-steps:

- Sampling said signal to obtain a digital sample;
- Storing the digital sample in a vector of samples having a predetermined length according to a FIFO storage technique;
- Upon each sampling, carrying out the scalar product between said vector of samples and a vector of real numbers, which represent exponential increment values depending on the internal temperature as obtained from the samples of the external temperature measured by the temperature sensor;
- Calculating an equivalent storage time at a reference temperature by calculating an acceleration factor according to the Arrhenius law, the equivalent storage time being representative of the residual life of the critical system;

M3. Storing, in the at least one memory (15) said digital data calculated in step M2;
M4. Communicating, by a passive RFID transponder (16) provided in said device, said digital data by accessing the memory, upon request of an external query RFID device (4,8) from remote from the passive RFID transponder (16).

**Patentansprüche**

1.  Vorrichtung (10) zur Überwachung des Gesundheitszustands eines kritischen Systems (2) mit begrenzter Lebensdauer, das einer Alterung gemäß einer Änderung seiner Innentemperatur im Laufe der Zeit unterliegt, umfassend:

- mindestens einen Messsensor (S1-S4), der geeignet ist, eine Größe zu messen, die geeignet ist, den Gesundheitszustand des kritischen Systems (2) zu beeinflussen, indem er ein Signal ausgibt, das Informationen bezüglich einer derartigen Größe trägt, wobei der Messsensor (S1-S4) einen Temperatursensor umfasst, der konfiguriert ist, um eine externe Temperatur des kritischen Systems zu messen;
- mindestens eine Verarbeitungseinheit (13), die betriebsmäßig mit dem Sensor (S1-S4) verbunden und geeignet ist, das genannte Signal zu empfangen und abzutasten, um digitale Daten bezüglich einer derartigen Größe bereitzustellen;
- mindestens einen Speicher (15), der geeignet ist, die genannten digitalen Daten oder daraus erhaltene digitale Daten durch die genannte, mindestens eine Verarbeitungseinheit (13) zu speichern;
- ein Stromversorgungssystem (18) des Messsensors (S1-S4) und der Verarbeitungseinheit (13);

**Dadurch gekennzeichnet, dass**:

- die genannte Vorrichtung (10) ferner einen passiven RFID-Transponder (16) einschließt, der geeignet ist, eine Anfrage von einer externen Abfrage-RFID-Vorrichtung (4,8) aus der Ferne zu empfangen und als Antwort die genannten digitalen Daten für die Abfragevorrichtung (4,8) durch Zugriff auf den Arbeitsspeicher bereitzustellen; und
- die digitalen Daten Daten umfassen, die sich auf die Speichertemperatur des kritischen Systems (2) beziehen, und wobei die mindestens eine Verarbeitungseinheit (13) programmiert ist, um eine äquivalente Speicherzeit bei einer Referenztemperatur durch Berechnen eines Beschleunigungsfaktors gemäß dem Arrhenius-Gesetz zu berechnen, wobei die äquivalente Speicherzeit repräsentativ für die Restlebensdauer des kritischen Systems ist;

Wobei, um die genannte äquivalente Speicherzeit zu berechnen, die mindestens eine Verarbeitungseinheit (13) programmiert ist zum:

- Abtasten des genannten Signals, um einen digitalen Abtastwert zu erhalten, und Speichern desselben in einem Vektor von Abtastwerten, der eine vorbestimmte Länge aufweist, gemäß einer FIFO-Speichertechnik;
- Bei jedem Abtasten Ausführen des Skalarprodukts zwischen dem genannten Vektor von Abtastwerten und einem Vektor reeller Zahlen, die exponentielle Inkrementwerte in Abhängigkeit von der Innentemperatur darstellen, wie sie aus den Abtastwerten der durch den Temperatursensor gemessenen Außentemperatur erhalten wird.

2. Vorrichtung (10) nach Anspruch 1, wobei die Verarbeitungseinheit (13) programmiert ist, um zwischen zwei Energieverbrauchszuständen umzuschalten, wobei einer der genannten Zustände ein Zustand ist, der im Vergleich zu dem anderen einen relativ begrenzten Verbrauch aufweist, wobei die Verarbeitungseinheit (13) derart beschaffen ist, dass sie normalerweise und hauptsächlich in dem genannten Zustand relativ begrenzten Verbrauchs bleibt, um in voreingestellten Zeitintervallen in den anderen Zustand umzuschalten, um das genannte Signal abzutasten.

3. Vorrichtung (10) nach Anspruch 2, die einen passiven Bewegungssensor (S5) umfasst, der betriebsmäßig mit der Verarbeitungseinheit (13) verbunden ist, wobei die Verarbeitungseinheit (13) derart ist, dass sie von dem Zustand relativ begrenzten Verbrauchs in den anderen Zustand umschaltet, wenn der passive Bewegungssensor (S5) eine Bewegung detektiert, die eine Breite aufweist, die einen voreingestellten Schwellenwert überschreitet.

4. Vorrichtung (10) nach Anspruch 3, wobei der genannte, mindestens eine Messsensor (S1-S4) einen Vibrations- und/oder mechanischen Stoßsensor umfasst, der angepasst ist, ein elektrisches Signal auszugeben, und wobei nach dem gennantem Schalten die Verarbeitungseinheit (13) derart ist, dass das von dem Vibrations- und/oder Stoßsensor bereitgestellte genannte elektrische Signal abgetastet wird.

5. Vorrichtung (10) nach einem der vorhergehenden Ansprüche, wobei die Verarbeitungseinheit (13) derart ist, dass sie in dem genannten Speicher (15) mindestens einen Datenvektor speichert, der ein Histogramm darstellt, und wobei die Verarbeitungseinheit (13) durch Vergleichen der genannten digitalen Daten mit Schwellenwerten derart ist, dass die digitalen Daten in spezifischen Elementen des genannten Vektors gespeichert werden, um das genannte Histogramm für die genannte externe Abfrage-RFID-Vorrichtung (4,8) nutzbar zu machen.

6. Vorrichtung (10) nach einem der vorhergehenden Ansprüche, wobei der genannte RFID-Transponder (16) eine planare invertierte PIFA-F-Antenne (19) umfasst.

7. Überwachungssystem (1), das mindestens eine Vorrichtung (10) nach einem der vorangehenden Ansprüche und mindestens eine Abfrage-RFID-Vorrichtung (4,8) umfasst, die geeignet ist, mit der genannten Vorrichtung (10) betriebsmäßig zusammenzuwirken.

8. Überwachungssystem nach Anspruch 7, wobei die mindestens eine Abfrage-RFID-Vorrichtung (4,8) konfiguriert ist, um die digitalen Daten an einen entfernten Server (9) zu übertragen.

9. Behälter (3) für ein kritisches System (2), das einen Gehäusekörper umfasst, der geeignet ist, ein kritisches System (2) darin aufzunehmen, und **dadurch gekennzeichnet, dass** er mindestens eine Vorrichtung (10) nach einem der vorhergehenden Ansprüche 1 bis 6 umfasst, die mit dem genannten Gehäusekörper mechanisch gekoppelt ist.

10. Verfahren zum Erhalten einer Alterungsschätzung eines gespeicherten kritischen Systems (2) mit begrenzter Lebensdauer, das einer Alterung gemäß einer Änderung seiner Innentemperatur im Laufe der Zeit unterliegt, das die Ausführung der folgenden Schritte umfasst:

M1. Bereitstellen einer Vorrichtung einschließlich:

- mindestens einen Messsensor (S1-S4), der geeignet ist, eine Größe zu messen, die geeignet ist, den Gesundheitszustand des kritischen Systems (2) zu beeinflussen, indem er ein Signal ausgibt, das Informationen bezüglich einer derartigen Größe trägt, wobei der Messsensor (S1-S4) einen Temperatursensor umfasst, der konfiguriert ist, um eine externe Temperatur des kritischen Systems zu messen;

- mindestens eine Verarbeitungseinheit (13), die betriebsmäßig mit dem Sensor (S1-S4) verbunden und geeignet ist, das genannte Signal zu empfangen und abzutasten, um digitale Daten bezüglich einer derartigen Größe bereitzustellen;
- mindestens einen Speicher (15), der geeignet ist, die genannten digitalen Daten oder daraus erhaltene digitale Daten durch die genannte Verarbeitungseinheit (13) zu speichern;
- ein Stromversorgungssystem (18) des Messsensors (S1-S4) und der Verarbeitungseinheit (13);

M2. Verarbeiten des genannten Signals durch die mindestens eine Verarbeitungseinheit (13) gemäß den folgenden Teilschritten:

- Abtasten des genannten Signals, um einen digitalen Abtastwert zu erhalten;
- Speichern des digitalen Abtastwerts in einem Vektor von Abtastwerten, der eine vorbestimmten Länge aufweist, gemäß einer FIFO-Speichertechnik;
- Bei jedem Abtasten Ausführen des Skalarprodukts zwischen dem genannten Vektor von Abtastwerten und einem Vektor reeller Zahlen, die exponentielle Inkrementwerte in Abhängigkeit von der Innentemperatur darstellen, wie sie aus den Abtastwerten der durch den Temperatursensor gemessenen Außentemperatur erhalten;
- Berechnen einer äquivalenten Speicherzeit bei einer Referenztemperatur durch Berechnen eines Beschleunigungsfaktors nach dem Arrhenius-Gesetz, wobei die äquivalente Speicherzeit repräsentativ für die Restlebensdauer des kritischen Systems ist;

M3. Speichern der in Schritt M2 berechneten genannten digitalen Daten in dem mindestens einen Speicher (15);
M4. Kommunizieren der genannten digitalen Daten durch einen in der genannten Vorrichtung bereitgestellten passiven RFID-Transponder (16) durch Zugriff auf den Speicher, auf Anforderung einer externen Abfrage-RFID-Vorrichtung (4,8) aus der Ferne von dem passiven RFID-Transponder (16).

**Revendications**

1. Dispositif (10) pour surveiller l'état de santé d'un système critique à durée de vie limitée (2), qui subit un vieillissement selon une variation de sa température interne au cours du temps, comprenant :

- au moins un capteur de mesure (S 1 à S4), conçu pour mesurer une amplitude conçue pour affecter l'état de santé du système critique (2) en émettant un signal portant des informations relatives à cette amplitude, le capteur de mesure (S1 à S4) comprenant un un capteur de température configuré pour mesurer une température externe du système critique ;
- au moins une unité de traitement (13), fonctionnellement connectée au capteur (S1 à S4) et conçue pour recevoir et échantillonner ledit signal pour fournir des données numériques relatives à cette amplitude ;
- au moins une mémoire (15), conçue pour stocker lesdites données numériques ou les données numériques obtenues à partir de celles-ci par le biais de ladite au moins une unité de traitement (13) ;
- un système d'alimentation électrique (18) du capteur de mesure (S1 à S4) et de l'unité de traitement (13) ;

**caractérisé en ce que** :

- ledit dispositif (10) inclut en outre un transpondeur passif à RFID (16), conçu pour recevoir une demande d'un dispositif à RFID d'interrogation externe (4, 8) à distance et pour fournir en réponse lesdites données numériques au dispositif d'interrogation (4, 8) par accès à la mémoire ; et
- les données numériques comprennent des données relatives à la température de stockage du système critique (2) et dans lequel l'au moins une unité de traitement (13) est programmée pour calculer un temps de stockage équivalent à une température de référence par calcul d'un facteur d'accélération selon la loi d'Arrhenius, le temps de stockage équivalent étant représentatif de la durée de vie résiduelle du système critique ;

pour calculer ledit temps de stockage équivalent, l'au moins une unité de traitement (13) étant programmée pour :

- échantillonner ledit signal pour obtenir un échantillon numérique et le stocker dans un vecteur d'échantillons à longueur prédéterminée selon une technique de stockage premier entré premier sorti (FIFO) ;
- à chaque échantillonnage, effectuer le produit scalaire entre ledit vecteur d'échantillons et un vecteur de nombres réels, qui représentent des valeurs d'incrément exponentiel selon la température interne telle qu'obtenue à partir des échantillons de la température externe mesurée par le capteur de température.

2. Dispositif (10) selon la revendication 1, dans lequel l'unité de traitement (13) est programmée pour commuter entre deux états de consommation d'énergie, l'un desdits états étant un état à consommation relativement limitée par rapport à l'autre et l'unité de traitement (13) étant à même de rester normalement et principalement dans ledit état de consommation relativement limitée pour commuter à l'autre état à des intervalles temporels prédéfinis, afin d'échantillonner ledit signal.

3. Dispositif (10) selon la revendication 2, comprenant un capteur de mouvement passif (S5) connecté fonctionnellement à l'unité de traitement (13), l'unité de traitement (13) étant à même de commuter de l'état de consommation relativement limitée à l'autre état, lorsque le capteur de mouvement passif (S5) détecte un mouvement de largeur dépassant un seuil prédéfini.

4. Dispositif (10) selon la revendication 3, dans lequel ledit au moins un capteur de mesure (S1 à S4) comprend un capteur de vibrations et/ou de chocs mécaniques conçu pour émettre un signal électrique et dans lequel après ladite commutation, l'unité de traitement (13) est à même d'échantillonner ledit signal électrique fourni par le capteur de vibrations et/ou de chocs.

5. Dispositif (10) selon l'une quelconque des revendications précédentes, dans lequel l'unité de traitement (13) est à même de stocker, dans ladite mémoire (15), au moins un vecteur de données représentant un histogramme et dans lequel l'unité de traitement (13), en comparant lesdites données numériques à des seuils, est à même de stocker les données numériques dans des éléments spécifiques dudit vecteur afin de rendre ledit histogramme utilisable par ledit dispositif à RFID d'interrogation externe (4, 8).

6. Dispositif (10) selon l'une quelconque des revendications précédentes, dans lequel ledit transpondeur à RFID (16) comprend une PIFA - Antenne plane en F inversé (19).

7. Système de surveillance (1) comprenant au moins un dispositif (10) selon l'une quelconque des revendications précédentes et au moins un dispositif à RFID d'interrogation (4, 8) conçu pour interagir fonctionnellement avec ledit dispositif (10).

8. Système de surveillance selon la revendication 7, dans lequel l'au moins un dispositif à RFID d'interrogation (4, 8) est configuré pour transmettre les données numériques à un serveur distant (9).

9. Conteneur (3) destiné à un système critique (2) comprenant un corps de confinement conçu pour qu'on y loge un système critique (2) et **caractérisé en ce qu'**il comprend au moins un dispositif (10) selon l'une quelconque des revendications précédentes 1 à 6, accouplé mécaniquement audit corps de confinement.

10. Procédé d'obtention d'une estimation de vieillissement d'un système critique à durée de vie limitée stocké (2) subissant un vieillissement selon une variation de sa température interne au cours du temps, comprenant l'exécution des étapes suivantes :

M1. l'utilisation d'un dispositif incluant :

- au moins un capteur de mesure (S 1 à S4), conçu pour mesurer une amplitude conçue pour affecter l'état de santé du système critique (2) en émettant un signal portant des informations relatives à cette amplitude, le capteur de mesure (S1 à S4) comprenant un un capteur de température configuré pour mesurer une température externe du système critique ;
- au moins une unité de traitement (13), fonctionnellement connectée au capteur (S1 à S4) et conçue pour recevoir et échantillonner ledit signal pour fournir des données numériques relatives à cette amplitude ;
- au moins une mémoire (15), conçue pour stocker lesdites données numériques ou les données numériques obtenues à partir de celle-ci par ladite unité de traitement (13) ;
- un système d'alimentation électrique (18) du capteur de mesure (S1 à S4) et de l'unité de traitement (13) ;

M2. le traitement, par l'au moins une unité de traitement (13), dudit signal selon les sous-étapes suivantes :

- l'échantillonnage dudit signal pour obtenir un échantillon numérique ;
- le stockage de l'échantillon numérique dans un vecteur d'échantillons de longueur prédéterminée selon une technique de stockage FIFO ;

- à chaque échantillonnage, la réalisation du produit scalaire entre ledit vecteur d'échantillons et un vecteur de nombres réels, qui représentent des valeurs d'incrément exponentiel dépendant de la température interne telle qu'obtenue à partir des échantillons de la température externe mesurée par le capteur de température ;

- le calcul d'un temps de stockage équivalent à une température de référence par calcul d'un facteur d'accélération selon la loi d'Arrhenius, le temps de stockage équivalent étant représentatif de la durée de vie résiduelle du système critique ;

M3. le stockage, dans l'au moins une mémoire (15), desdites données numériques calculées à l'étape M2 ;
M4. la communication, par un transpondeur passif à RFID (16) situé dans ledit dispositif, desdites données numériques par accès à la mémoire, sur demande d'un dispositif à RFID d'interrogation externe (4,8) à distance du transpondeur passif à RFID (16).

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003058130 A1
- WO 2011072674 A1

- EP 1992904 A2